# EUROPEAN PATENT APPLICATION

(11) **EP 3 543 765 A1**
(43) Date of publication of application: **25.09.2019**
(21) Application number: 17871662.7
(22) Date of filing: 07.11.2017
(51) Int. Cl.: G02B 27/01, B05C 13/02, B60K 35/00

(54) **DISPLAY MEMBER, HEAD-UP DISPLAY DEVICE, AND JIG**

(30) Priority: 16.11.2016 JP 2016222990
(71) Applicant: Konica Minolta, Inc., Tokyo 100-7015 (JP)
(72) Inventor: KAMIKURA, Takayuki, Tokyo 100-7015 (JP); KIYOSUE, Shigenori, Tokyo 100-7015 (JP)
(74) Representative: Henkel, Breuer & Partner
(86) International application number: PCT/JP2017/040081
(87) International publication number: WO 2018/092636

(57) **Abstract**

A display member (200) includes the following. An optical surface (201) on which a predetermined process is performed includes a predetermined curvature. A plurality of member engaging units (203) are linked to the optical surface (201). The member engaging units (203) are formed aligned in one line or aligned parallel, and are held by a jig engaging unit (302) of a jig (300). The member engaging units (203) are held by the jig engaging unit (302) and the display member (200) is held through the jig (300) during the predetermined process.

## Description

### Technological Field

The present invention relates to a head-up display device mainly used in an automobile, for example. More specifically, the present invention relates to a display member which is preferably used in a head-up display device, a head-up display device, and a jig with which, through a translucent display member (combiner), scenery in front of the vehicle which is viewed by light passing through a combiner and images and information provided by light reflected from the combiner can be viewed overlapped in a visual field of a driver (observer).

### Background Art

If information such as speed shown on meters in a vehicle can be directly projected on a windshield as a virtual image while a driver is driving an automobile, the driver can drive without changing his visual field, and this may prevent an accident. As a means to directly project information to a visual field of a human, a head-up display device is developed. Usually in such head-up display device, light emitted from a projector such as a small liquid crystal projector passes light and reflects light with a combiner (display member) formed from a transparent base including a half mirror or a windshield. Therefore, a driver (observer) is able to obtain information displayed on the combiner and is also able to obtain at the same time outside information such as outside scenery through the combiner.

A hard coat layer may be provided in a layer forming a surface of a combiner in order to provide a certain degree of hardness to the combiner for the purpose of preventing cracks. The hard coat layer can be typically formed by dipping the material of the combiner in a processing liquid and then drying and hardening the above. In such case, there is a problem of how to dip the material of the combiner formed by injection molding in the processing liquid.

Patent Literature 1 discloses a technique to hold an edge surface of the material to be coated between a jig above the liquid and a jig in the liquid having a scissor shape when the material to be coated in a plate shape is dipped in coating liquid in a liquid tank by a dip coating method. According to Patent Literature 1, when the material to be coated is a thin plate shape as in a combiner, if the edge surface is held with a scissor shaped jig, the material may easily fall out of the jig if force is applied in the direction that the material to be coated falls. If the power to hold is increased in the jig to prevent such case, a mark where the edge surface is pressed may remain on the edge surface of the material to be coated, and this may reduce the quality of the product. Moreover, if the jig in the liquid is driven in the coating liquid, dust from sliding may be generated and the coating liquid may be contaminated.

### Prior Art Document

### Patent Literature

Patent Literature 1: Japanese Patent Application Laid-Open Publication No. H08-299891
Patent Literature 2: Japanese Patent Application Laid-Open Publication No. H09-248507

### Summary

### Problems to be Solved by the Invention

In view of the above, Patent Literature 2 discloses a configuration in which one end of a S-shaped hook is hooked to a moving round stick, the other end is hooked to a hole of the base, and the base in a hung state is dipped in the dipping section. According to the technique disclosed in Patent Literature 2, the base can be dipped in the dipping unit without a mark remaining. However, when the base shakes or falls in the liquid, the base cannot be dipped accurately to a defined position. Moreover, if a hole is provided only for the purpose of hanging the base, this hole remains in the completed product. Therefore, this also reduces the quality of the product.

The present invention is made in view of the above problems, and the purpose of the present invention is to provide a display member which is suitably held in order to be able to perform a predetermined process, a head-up display device which uses such display member, and a jig which holds such display member.

### Means for Solving the Problem

According to the present invention, a display member includes: an optical surface on which a predetermined process is performed and which includes a predetermined curvature; and a plurality of member engaging units linked to the optical surface, wherein, the member engaging units are formed aligned in one line or aligned parallel, and are held by a jig engaging unit of a jig, and the member engaging units are held by the jig engaging unit and the display member is held through the jig during the predetermined process.

### Advantageous Effects of Invention

According to the present invention, a display member which is suitably held in order to be able to perform a predetermined process, a head-up display device which uses such display member, and a jig which holds such display member can be provided.

### Brief Description of the Drawings

FIG. 1 is a diagram showing a state in which a head-up display device is mounted on a vehicle body VH.
FIG. 2 is a diagram showing a configuration of a drawing unit 100.
FIG. 3A is a diagram showing a front view (opposite driver side) of a combiner 200 according to a first embodiment.
FIG. 3B is a diagram showing a top view of the combiner 200 according to the first embodiment.
FIG. 4 is a diagram showing a state holding the combiner 200 with the jig 300.
FIG. 5 is a diagram showing the combiner 200 held by the jig 300 being dipped.
FIG. 6 is a diagram showing a state holding the combiner 200 with a jig 300' which is a modification of an embodiment.
FIG. 7 is a diagram showing a state holding the combiner 200' of the modification with a jig 300" according to the modification.
FIG. 8A is a diagram showing a front view (opposite driver side) of a combiner 200A according to a second embodiment.
FIG. 8B is a diagram showing an upper view of the combiner 200A according to the second embodiment.
FIG. 9 is a diagram showing a state holding a combiner 200A with a jig 300A according to the second embodiment.
FIG. 10 is a diagram showing a state holding a combiner 200 with a jig 300B according to the third embodiment.

### Embodiment for Carrying Out the Invention

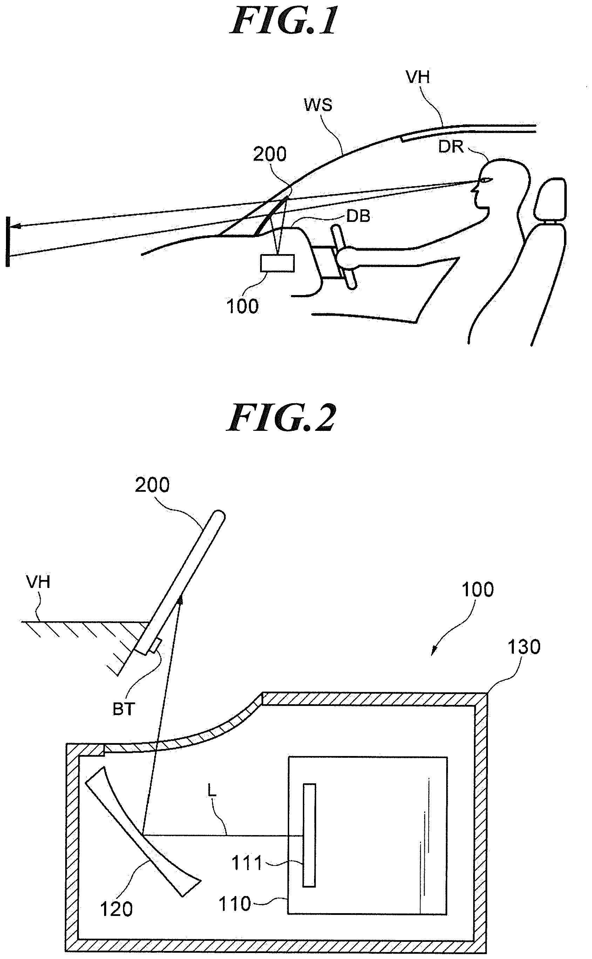

An embodiment of the present invention is described with reference to the drawings. FIG. 1 is a diagram showing a state of a head-up display device according to the present embodiment mounted on a vehicle body VH. A drawing unit 100 is positioned in a dashboard DB of the vehicle body VH and the drawing unit 100 projects display light to a combiner 200 as a display member positioned fixed on the dashboard DB. Such display light is guided to a pupil of a driver DR who is the observer by reflection or diffraction, and a virtual image (display image) is displayed. The driver DR is able to observe a real image such as scenery passing through a windshield WS and the combiner 200 overlapped with the virtual image. The combiner 200 may be foldable or may slide vertically to be storable in the dashboard DB. The head-up display device includes the drawing unit 100 and the combiner 200.

FIG. 2 is a diagram showing a schematic configuration of a drawing unit 100. The drawing unit 100 mainly includes a drawing device 110 including a liquid crystal display panel 111, a concave mirror 120, and a housing 130. The configuration of the drawing device is described in detail in, for example, Japanese Patent Application Laid-Open Publication No. 2012-203176.

The liquid crystal display panel 111 is formed by attaching polarizing plates on both the front surface and the rear surface of a liquid crystal cell enclosing a liquid crystal layer in a pair of translucent substrates in which a transparent electrode film is formed. The light guided from a light source (not shown) in the drawing device 110 to a surface of the liquid crystal display panel 111 passes through the liquid crystal display panel 111 and becomes the display light L. The light is illuminated on the concave mirror (or planar mirror) 120 included in a projection optical system. After the light is reflected, the light heads toward the combiner 200. The combiner 200 is a plate formed in a plate shape with a thickness of 3 to 5 mm (preferably, no larger than 10 mm). A projecting surface of the combiner 200 (driver side) is a toric surface (can also be a free-form surface or spherical surface) in a concave shape with a curvature radius of 100 mm or more to form a virtual image and the rear surface (vehicle front side) is a spherical surface or an aspherical surface similar to the above.

### (First Embodiment)

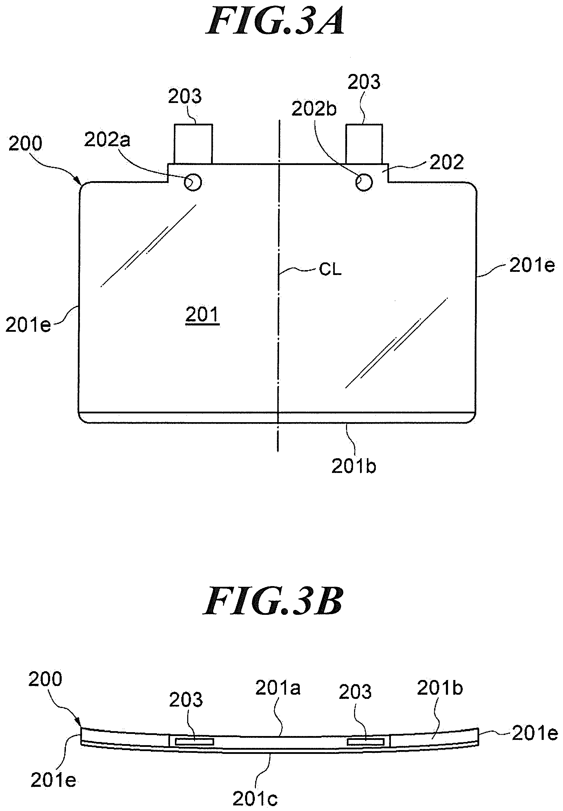

FIG. 3A is a diagram showing a front view (opposite driver side) of a combiner 200 according to a first embodiment, and FIG. 3B is a diagram showing a top view of the combiner 200. For example, the combiner 200 is formed as one by molding a transparent resin such as polycarbonate, COP, and acrylic by injection molding (mold internal pressure sensor may be used). The combiner 200 includes a projector 201, a supporter 202 formed in one edge of the projector 201, engaging units (member engaging unit) 203 which are a pair of rectangular plates linked to the supporter 202. A projecting surface (one optical surface) 201a of a projector 201 is a toric surface (free-form surface or spherical surface) in a suitable concave shape to form a virtual image, and the rear surface (other optical surface) 201c is a spherical surface or aspherical surface in a similar convex shape. Preferably, a plate thickness of the projector 201 is constant, but the thickness may increase or decrease farther from the center.

By vapor depositing a well-known half mirror film, preferably, the surface of the projector 201 includes a half mirror function with a transmittance of 70% or more and 80% or less. By forming a hard coat on the entire surface of the combiner 200, it becomes resistant to scratches. Preferably, the refractive index of the hard coat attached to the combiner 200 has substantially the same refractive index as the combiner 200. The hard coat is applied using a dipping method, a spray method, a flow method, and a spinning method. The dipping method is used in the later-described example. The film thickness of the hard coat is applied in a range of 0.5µ to 20µm, preferably 1 to 10µm.

As an edge surface (edge) of the projector 201, an upper edge surface 201b which is positioned at the top when attached to the vehicle body VH and a side edge surface 201e are formed. The projecting surface 201a is preferably a spherical surface or an aspherical surface with a curvature radius of 100 mm or more, preferably 200 mm or more and 800 mm or less.

Two attaching holes 202a and 202b are formed in a single supporter 202. The combiner 200 may be attached to the vehicle body VH by inserting bolts BT (see FIG. 2) through the attaching holes 202a and 202b to be screwed on to a part of the vehicle body VH or by using adhesive to be fixed to a portion of the vehicle body VH. The method to fix the combiner 200 to the vehicle body VH is not limited to the above.

The engaging unit 203 formed in the same plate shape is formed separated in an even interval from a center line CL of the combiner 200 and each surface of one engaging unit 203 exists on the same plane as each surface of the other engaging unit 203. The plate thickness of the engaging unit 203 can be thinner than the plate thickness of the projector 201, or may be thicker. Alternatively, the thickness can be the same.

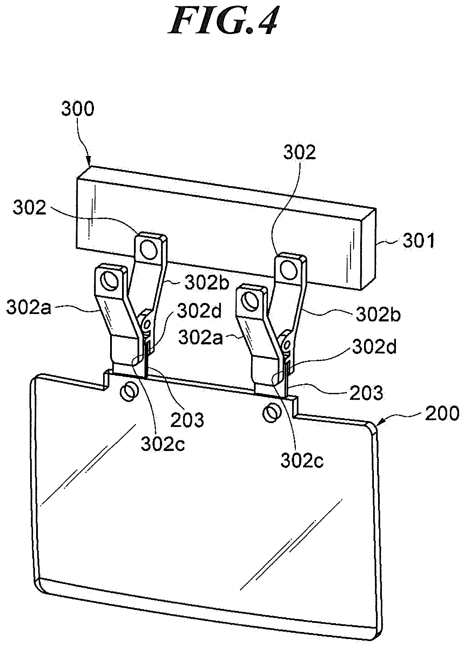

FIG. 4 is a diagram showing a state in which the jig 300 holds the combiner 200. As shown in FIG. 4, the jig 300 includes a plate shaped frame 301 which can be moved three dimensionally supported by a stage (not shown), and a pair of holders 302, 302 which are attached separated from each other on the same surface as the frame 301.

The holders 302 are shaped like a clothespin, and each holder 302 includes a pair of arms 302a and 302b, and a coil spring (not shown) positioned between the above. The arms 302a and 302b included in the jig engaging unit are linked pivotable in the middle, and the coil spring (not shown) is biased to close the lower edge of the arms 302a and 302b. The upper edges of the arms 302b are linked to the frame 301. A holding surface 302d provided in the lower edge of the arm 302b is a planar surface, and the holding surfaces of the pair of arms 302b exist on the same plane. A lower edge holding surface 302c of the arm 302a opposed to the holding surface 302d may be a planar surface and may be provided with a material to prevent slipping such as rubber.

By turning on an actuator (not shown), the upper edge of the arm 302a is driven, the lower edges of the arms 302a and 302b open, and the holding surfaces 302c and 302d are separated. When the actuator is turned off, the urging force of the coil spring causes the lower edge of the arms 302a and 302b to close. The opening/closing operation is performed synchronized in the pair of holders 302. The upper edges of the pair of arms 302a collides with another member at a predetermined opening/closing position and the frame 301 may move so that the lower edge of the arms 302a and 302b can be opened/closed. With this, there is no need for the actuator.

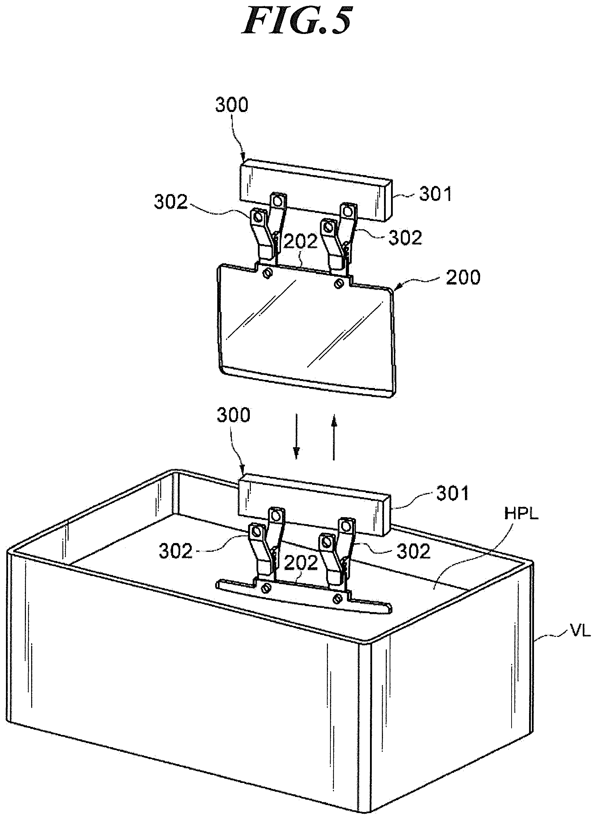

Next, the surface processing method of the combiner 200 which is the predetermined process is described with reference to the drawings. FIG. 5 is a diagram showing the combiner 200 held by the jig 300 being dipped. Although not shown, the combiner 200 before being processed is stored in a state standing in a storage. For example, using the stage (not shown) which moves according to a three-dimensional coordinate input in advance, the frame 301 is positioned above the combiner 200 before processing, the lower edges of the arms 302a and 302b open with the on operation of the actuator, and the frame is lowered from this position.

When the holding surfaces 302c and 302d reach a position facing the engaging units 203 of the combiner 200, the frame 301 is stopped. With the off operation of the actuator, the holding surfaces 302c and 302d are brought close to each other with the urging force of the coil spring, and the holding surfaces 302c and 302d come into contact and press both surfaces of the engaging units 203. With this, the engaging unit 203 is held by the holding unit 302. Here, frictional force occurs between the holding surfaces 302c and 302d and both surfaces of the engaging units 203. When the frame 301 is raised as is, the combiner 200 is also raised in a state with the engaging units 203 held by the arms 302a and 302b.

Then, as shown in FIG. 5, after the frame 301 is moved above the liquid tank VL in which hard coat processing liquid HPL is accumulated, the frame 301 is lowered until the hard coat processing liquid surface comes to a defined position with relation to the projecting surface (one optical surface) 201a and the rear surface (other optical surface) 201c of the projector 201. After the projector 201 and the supporter 202 are dipped in the hard coat processing liquid HPL, the frame 301 is raised, the combiner 200 is raised from the liquid tank VL, and the combiner 200 is conveyed with the frame 300 to perform the following processes. Here, the jig 300 releases the combiner 200 and then moves to the storage again. The engaging unit 203 is provided for the purpose of conveying, but this may be cut in the later processes if it is not necessary or kept if necessary, depending on the specifications.

According to the present embodiment, the holding surface 302c aligned accurately in one line supports the surface of the engaging unit 203 aligned accurately in one line similarly, and the jig 300 can securely hold the combiner 200 without damaging the optical surfaces 201a and 201c. With this, it is possible to prevent problems such as the combiner 200 shaking or falling during the movement or processing. The holding surfaces 302c aligned accurately in one line support the surface of the engaging unit 203 aligned accurately in one line similarly. Therefore, the jig 300 can hold the combiner 200 accurately. With this, the combiner 200 can be dipped to a suitable position on the liquid surface of the hard coat processing liquid HPL in the liquid tank VL, and with this, the product quality is enhanced. The position that the jig 300 holds the combiner 200 is constant. Therefore, the jig 300 is not dipped in the hard coat processing liquid when the combiner 200 is dipped in the hard coat processing liquid. Therefore, it is possible to prevent contamination of the hard coat processing liquid HPL. Further, even if the specifications of the combiner 200 are changed, if the shape of the engaging units 203 is the same, the combiner 200 can be held with the conventional jig 300. Therefore, it is possible to keep the rise in costs due to change in specifications to a minimum. Here, "in one line" does not only mean exactly on the same plane, and may include situations in which the units are tilted within plus/minus five degrees from each other.

### (Modification of First Embodiment)

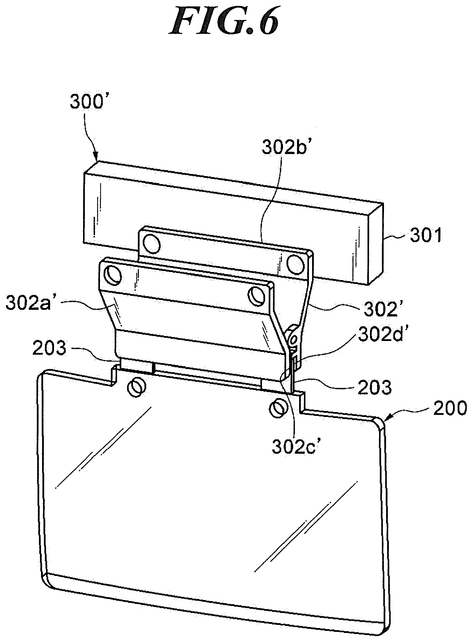

FIG. 6 is a diagram showing the combiner 200 held by the jig 300' which is a modification of the present embodiment. According to this example, in FIG. 6, only one holder 302' is attached to the frame 301. The holder 302' includes the arms 302a' and 302b', but the length is long so as to cover the pair of engaging units 203 of the combiner 200. The other configurations are the same as the above-described embodiment.

According to the modification shown in FIG. 6 also, with the on operation of the actuator (not shown), the upper edge of the arm 302a' is driven to open the lower edges of the arms 302a' and 302b' and the holding surfaces 302c' and 302d' are separated. With the off operation of the actuator, the lower edges of the arms 302a' and 302b' are closed by the urging force of the coil spring and the engaging unit 203 is held.

### (Modification of First Embodiment)

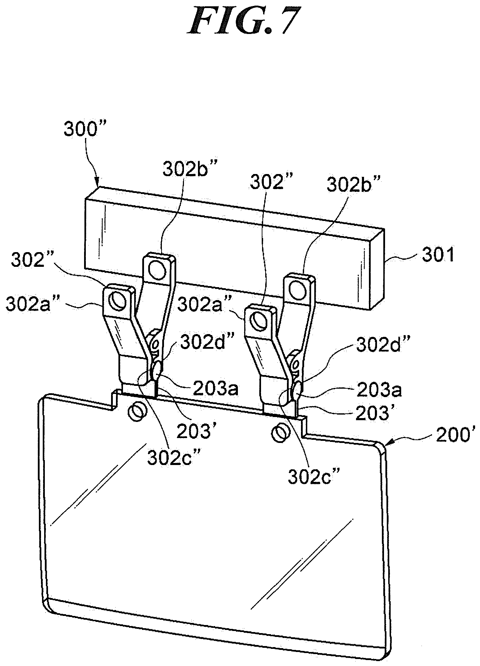

FIG. 7 is a diagram showing the combiner 200' according to the modification held by the jig 300" according to the modification. The combiner 200' includes a cylinder 203a formed on each upper edge of the engaging unit 203'. The axes of the two cylinders 203a match with each other. The holding surface 302d" provided on the lower edge of the arm 302b" has a cylindrical surface in a concave shape according to an outer circumferential surface of the cylinder 203a, and the holding surfaces 302d" of the pair of arms 302b" have a common axis. The holding surface 302c" provided on the lower edge of the arm 302a" is a concave cylindrical surface according to the outer circumferential surface of the cylinder 203a, and the holding surfaces 302c" of the pair of arms 302a" have a common axis.

According to the modification shown in FIG. 7, with the on operation of the actuator (not shown), the upper edge of the arm 302a" is driven to open the lower edge of the arms 302a" and 302b" and the holding surfaces 302c" and 302d" are separated. With the off operation of the actuator, the lower edge of the arms 302a" and 302b" are closed by the urging force of the coil spring, and the holding surfaces 302c" and 302d" are engaged to the outer circumference of the cylinder 203a without looseness. The axis of the cylinder can be parallel or a prism can be provided instead of the cylinder.

### (Second Embodiment)

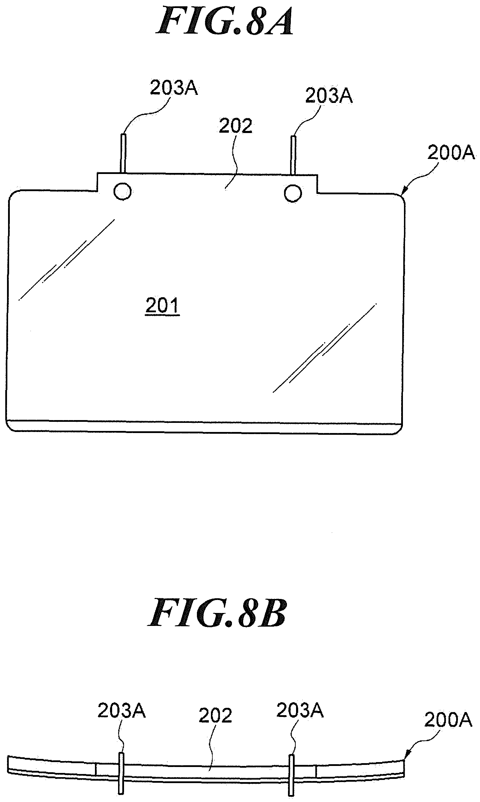

FIG. 8A is a diagram showing a front view (opposite driver side) of the combiner 200A according to a second embodiment. FIG. 8B is a diagram showing a top view of the combiner 200A. The combiner 200A according to the present embodiment includes a pair of engaging units 203A with a different shape. The engaging units 203A include a same plate shape parallel to the optical axis and exist on a position extending parallel to each other. The other configurations are the same as the above-described embodiment.

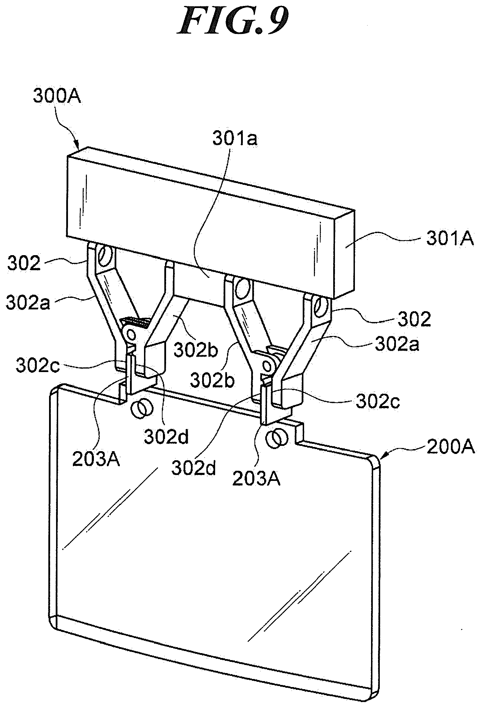

FIG. 9 is a diagram showing the jig 300A according to the second embodiment holding the combiner 200A. As shown in FIG. 9, in the jig 300A, the upper edge of the arm 302b is linked to both opposing edges of an attaching unit 301a projecting in a rectangular plate shape from the bottom edge of the frame 301A. The configuration of the holder 302 is the same as the first embodiment. Here, the holding surfaces 302d of the pair of arms 302b are in the same interval as the engaging unit 203A of the combiner 200A and parallel to each other. The other configurations are the same as the above-described embodiment. Here, "parallel" does not only mean exactly parallel, and may include situations in which the units are tilted within plus/minus five degrees from each other.

According to the present embodiment, with the on operation of the actuator (not shown), the upper edge of the arm 302a is driven to open the lower edges of the arms 302a and 302b and the holding surfaces 302c and 302d are separated. With the off operation of the actuator, the lower edges of the arms 302a and 302b are closed by the urging force of the coil spring and the engaging unit 203A can be held.

### (Third Embodiment)

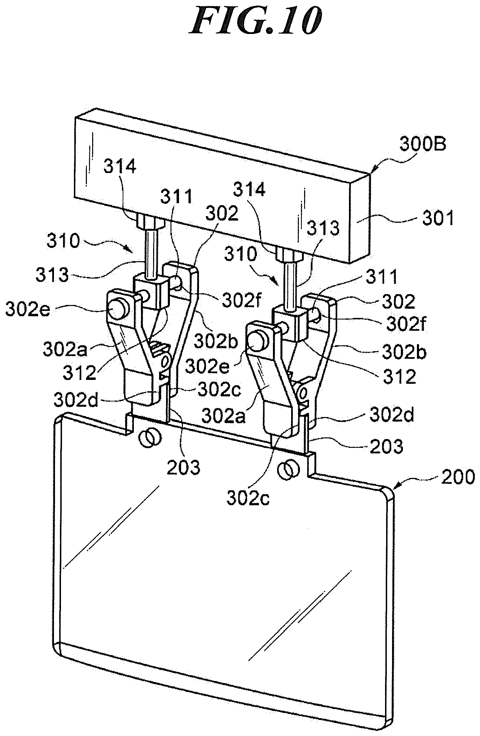

FIG. 10 is a diagram showing the jig 300B according to the third embodiment holding the combiner 200. The jig 300B according to the present embodiment supports the holder 302 through an automatic angle adjusting mechanism 310. The configuration of the holder 302 is similar to the first embodiment. Similar to the first embodiment, in the combiner 200, the engaging units 203 are formed separated in an even interval from the center line CL of the combiner 200, and the surfaces of one engaging unit 203 exist on the same plane as the surfaces of the other engaging unit 203. Specifically, a horizontal axis 311 is positioned to be able to slide in openings 302e and 302f formed on the upper edge of the arms 302a and 302b. The linking unit 312 in a cube shape is formed in the center of the horizontal axis 311, a vertical axis 313 extends upward from the linking unit 312, and the upper edge of the vertical axis 313 is supported to be able to rotate by a bearing 314 connected to the lower edge of the frame 301.

According to the present embodiment, with the on operation of the actuator (not shown), the lower edges of the arms 302a and 302b are opened, and the holding surfaces 302c and 302d are separated. With the off operation of the actuator, the lower edges of the arms 302a and 302b are closed by the urging force of the coil spring and the engaging unit 203 is held.

Here, when there is a tilt due to defects in molding between the pair of engaging units 203 which are to exist on the same plane, if the holding surfaces 302c and 302d are exactly aligned in the pair of holders 302, stress may occur on the engaging unit 203 when the holding surfaces 302c and 302d contact both surfaces of the engaging unit 203 to a degree that fracture may occur from the base.

According to the present embodiment, since the automatic angle adjustment mechanism 310 is provided, when there is a tilt in the holding surfaces 302ca and 302d, the vertical axis 313 rotates in accordance with the holding surfaces 302c and 302d coming into contact with both surfaces of the engaging unit 203, and with this, the arms 302a and 302b are tilted similar to the engaging unit 203. Therefore, the engaging unit 203 can be held suitably.

As in the second embodiment shown in FIG. 8, when the engaging unit 203A from the upper edge of the combiner 200A includes a same plate shape parallel to the optical axis and exist on a position extending parallel to each other, since the automatic angle adjustment mechanism 310 is provided, the vertical axis 313 rotates. With this, the arms 302a and 302b are tilted similar to the engaging unit 203. With this, the engaging unit 203 can be suitably held.

The present invention is not limited to the embodiments described in this description. It is clear to those skilled in the art from the embodiments and ideas described in the description that other embodiments and modifications are included in the present invention. For example, the display member and the head-up display device according to the present invention is not limited to use in automobiles and can also be used in airplanes and heavy machinery. The processing liquid is not limited to hard coat processing liquid and includes processing liquid to form various layers such as antifouling coat, antireflective coat, and the like.

### Industrial Applicability

The present invention can be used in a display member, a head-up display device and a jig.

### Description of Reference Numerals

100 drawing unit
110 drawing device
111 liquid crystal display panel
120 concave mirror
130 housing
200, 200', 200A combiner
201 projector
201a, 201c projecting surface
201b upper edge surface
201e side edge surface
202 supporter
202a attaching hole
203, 203', 203A engaging unit
203a cylinder
300, 300", 300A, 300B jig
301, 301A frame
301a attaching unit
302 holder
302a, 302a', 302a" arm
302b, 302b', 302b" arm
302c, 302c', 302c" holding surface
302d, 302d', 302d" holding surface
302e, 302f opening
310 automatic angle adjusting mechanism
311 horizontal axis
312 linking unit
313 vertical axis
314 bearing
BT bolt
DB dashboard
DR driver
HPL hard coat processing liquid
L display light
VH vehicle
VL liquid tank
WS windshield

## Claims

1. A display member comprising:
an optical surface on which a predetermined process is performed and which includes a predetermined curvature; and
a plurality of member engaging units linked to the optical surface,
wherein, the member engaging units are formed aligned in one line or aligned parallel, and are held by a jig engaging unit of a jig, and
the member engaging units are held by the jig engaging unit and the display member is held through the jig during the predetermined process.

2. The display member according to claim 1, wherein the predetermined process is a process in which the optical surface of the display member held by the jig is dipped in a processing liquid.

3. The display member according to claim 1 or 2, wherein the member engaging units are cut after the predetermined process.

4. A head-up display device comprising:
a display member according to any one of claims 1 to 3; and
a drawing unit which emits a display light to the display member.

5. A jig which holds the display member according to any one of claims 1 to 3, the jig comprising:
a jig engaging unit which holds both surfaces of the plurality of member engaging units.

6. The jig according to claim 5, wherein, the predetermined process is a process in which the optical surface of the display member held by the jig is dipped in the processing liquid, and the jig engaging unit is not dipped in the processing liquid.

7. The jig according to claim 5 or 6, wherein the jig engaging unit includes a plate, a prism or a cylinder aligned in one line or aligned in parallel.
